# FASCICULE DE BREVET EUROPEEN

(11) **EP 0 950 910 B1**
(45) Date de publication et mention de la délivrance du brevet: **02.01.2004**
(21) Numéro de dépôt: 99400709.4
(22) Date de dépôt: 23.03.1999
(51) Int. Cl.: G02B 23/16

(54) **Dispositif escamotable, de type pare-soleil, pour un instrument optique tel qu'un téléscope spatial**
Einklappbare Vorrichtung vom Typ eine Sonnenblende für ein optisches Instrument wie beispielweise ein Weltraumteleskop
Retractable sun-shield type device for an optical instrument such as a space telescope

(30) Priorité: 26.03.1998 FR 9803748
(43) Date de publication de la demande: 20.10.1999
(73) Titulaire: ALCATEL, 75008 Paris (FR)
(72) Inventeur: Krawczyk, Rodolphe André, Bonneau, 06270 Villeneuve-Loubet (FR)
(74) Mandataire: Poulin, Gérard

(56) Documents cités:
- GB-A- 2 052 037
- US-A- 3 558 219
- US-A- 3 791 713
- US-A- 3 978 490
- US-A- 4 608 571
- US-A- 4 642 652

## Description

### Domaine technique

L'invention concerne un dispositif escamotable de type pare-soleil, conçu pour s'opposer à une entrée de lumière parasite, en provenance du soleil ou de toute autre source lumineuse, dans un instrument optique tel qu'un télescope, lorsque ce dispositif est en configuration active.

Le dispositif selon l'invention trouve une application privilégiée dans le domaine spatial. En effet, lorsqu'il est en configuration escamotée, son encombrement réduit est particulièrement adapté aux contraintes de compacité imposées lors du lancement. Au contraire, sa configuration active lui permet d'être opérationnel lorsque le véhicule spatial est à poste.

### Etat de la technique

Lorsqu'un instrument optique doit être muni d'un pare-soleil, la technique la plus courante consiste à utiliser un pare-soleil rigide intégré à l'instrument ou rapporté sur celui-ci.

Dans le domaine spatial, l'utilisation de pare-soleil rigides n'est possible que dans le cas où il s'agit d'un pare-soleil de petites dimensions et notamment de faible longueur. En effet, lorsque les dimensions du pare-soleil augmentent, elles deviennent rapidement incompatibles avec les contraintes d'encombrement imposées lors du lancement. Ainsi, un pare-soleil rigide de grande longueur intégré à un instrument optique ne pourrait pas toujours être placé dans le volume réduit disponible sous la coiffe d'un lanceur.

Pour cette raison, certains instruments optiques embarqués sur des véhicules spatiaux ont été équipés de pare-soleil escamotables. De tels pare-soleil occupent une configuration escamotée ou repliée lorsqu'ils sont placés sous la coiffe du lanceur. Ils sont alors généralement bridés par des dispositifs dits "de gerbage" qui leur permettent de supporter les accélérations et les vibrations du lancement. Lorsque le véhicule spatial est séparé du lanceur, des dispositifs de commande permettent d'amener le pare-soleil dans une configuration active ou déployée.

Dans l'état actuel de la technique, les pare-soleil escamotables qui équipent les instruments optiques embarqués sur des véhicules spatiaux incluent des mécanismes qui peuvent être relativement complexes, par exemple de type pantographe ou télescopique. Compte tenu des contraintes particulières dues à l'environnement spatial (lubrification dans le vide, sollicitations mécaniques lors du lancement, etc.), de tels mécanismes peuvent être très coûteux, notamment pour des raisons de fiabilité.

### Exposé de l'invention

L'invention a précisément pour objet un dispositif escamotable, de type pare-soleil, dont la conception et la réalisation particulièrement simples lui permettent d'être sensiblement plus économique et plus fiable que les dispositifs escamotables existants.

Conformément à l'invention, ce résultat est obtenu au moyen d'un dispositif escamotable, apte à s'opposer à une entrée de lumière parasite par une ouverture d'un instrument optique d'axe donné, caractérisé par le fait qu'il comprend des tiges articulées autour de l'instrument optique dans des plans contenant ledit axe, ou parallèle à celui-ci, une enveloppe souple et opaque portée par lesdites tiges, et des moyens de commande aptes à faire pivoter les tiges entre une configuration escamotée dans laquelle l'enveloppe est placée autour de l'instrument optique et une configuration active dans laquelle l'enveloppe prolonge celui-ci au-delà de ladite ouverture.

Dans une forme de réalisation préférée de l'invention, les tiges comprennent des premières tiges auxquelles est fixée l'enveloppe et des deuxièmes tiges montées entre les premières tiges et coopérant avec l'enveloppe pour la maintenir radialement vers l'extérieur entre celles-ci, dans la configuration active.

De façon plus précise, dans la configuration active, les premières tiges sont orientées sensiblement parallèlement à l'axe de l'instrument optique et les deuxièmes tiges s'écartent progressivement de cet axe, au-delà de l'ouverture de l'instrument optique.

Selon le cas, une seule deuxième tige ou au moins deux deuxièmes tiges sont montées entre deux premières tiges consécutives.

Afin de maintenir l'enveloppe radialement vers l'extérieur entre les premières tiges, dans la configuration active, les deuxièmes tiges sont de préférence en appui sur une face de l'enveloppe apte à être tournée vers l'axe de l'instrument optique, dans cette même configuration active.

Lorsque le dispositif de type pare-soleil doit présenter une forme symétrique, les tiges sont régulièrement réparties autour de son axe et sont sensiblement de même longueur.

Un dispositif dissymétrique peut toutefois être obtenu en donnant aux tiges des longueurs différentes.

Selon une première forme de réalisation de l'invention, dans la configuration escamotée les tiges sont situées dans un plan perpendiculaire à l'axe de l'instrument optique.

Selon une deuxième forme de réalisation de l'invention, dans la configuration escamotée les tiges sont orientées sensiblement parallèlement à l'axe de l'instrument optique, autour de cet axe, en-deçà de l'ouverture.

Selon une troisième forme de réalisation de l'invention, dans la configuration escamotée les tiges s'écartent progressivement de l'axe de l'instrument optique, autour de cet axe, en-deçà de l'ouverture.

De préférence, chacune des tiges est formée d'un seul tronçon rigide.

En variante, chacune des tiges peut aussi être formée d'au moins deux tronçons rigides articulés bout à bout, de façon à être repliés l'un sur l'autre dans la configuration escamotée et de façon à être disposés dans le prolongement l'un de l'autre dans la configuration active.

### Brève description des dessins

On décrira à présent, à titre d'exemples non limitatifs, différentes formes de réalisation de l'invention, en se référant aux dessins annexés, dans lesquels :
- la figure 1 est une vue de côté, en coupe partielle selon la ligne I-I de la figure 2, qui représente schématiquement une partie d'un véhicule spatial comportant un instrument optique équipé d'un dispositif escamotable selon une première forme de réalisation de l'invention, ce dispositif étant représenté en configuration escamotée ;
- la figure 2 est une vue de dessus du véhicule de la figure 1 ;
- la figure 3 est une vue comparable à la figure 1, sur laquelle le dispositif escamotable est représenté schématiquement en configuration active ;
- la figure 4 est une vue en perspective montrant le dispositif escamotable en configuration active ;
- la figure 5 est une vue perspective comparable à la figure 4, illustrant une variante de la première forme de réalisation du dispositif escamotable, en configuration escamotée, dans le cas où chaque tige du dispositif est formée de deux tronçons rigides articulés ;
- la figure 6 est une vue comparable à la figure 1, illustrant une deuxième forme de réalisation du dispositif escamotable selon l'invention, illustrée en trait plein dans sa configuration escamotée et en traits mixtes dans sa configuration active ;
- la figure 7 est une vue schématique comparable à la figure 6, représentant une variante de la deuxième forme de réalisation du dispositif escamotable selon l'invention, dans sa configuration escamotée, lorsque chacune des tiges du dispositif est formée de deux tronçons articulés ;
- la figure 8 est une vue comparable à la figure 7 illustrant une première étape de déploiement du dispositif escamotable illustré sur la figure 7 ;
- la figure 9 est une vue comparable aux figures 7 et 8 illustrant une deuxième étape de déploiement du dispositif escamotable illustré sur ces figures ;
- la figure 10 est une vue comparable aux figures 1 et 6, illustrant une troisième forme de réalisation du dispositif escamotable selon l'invention ;
- la figure 11 est une vue de dessus comparable à la figure 2, illustrant une autre variante de réalisation de l'invention ; et
- la figure 12 est une vue en perspective illustrant le dispositif escamotable de la figure 11 en configuration active.

### Description détaillée de plusieurs formes de réalisation préférées de l'invention

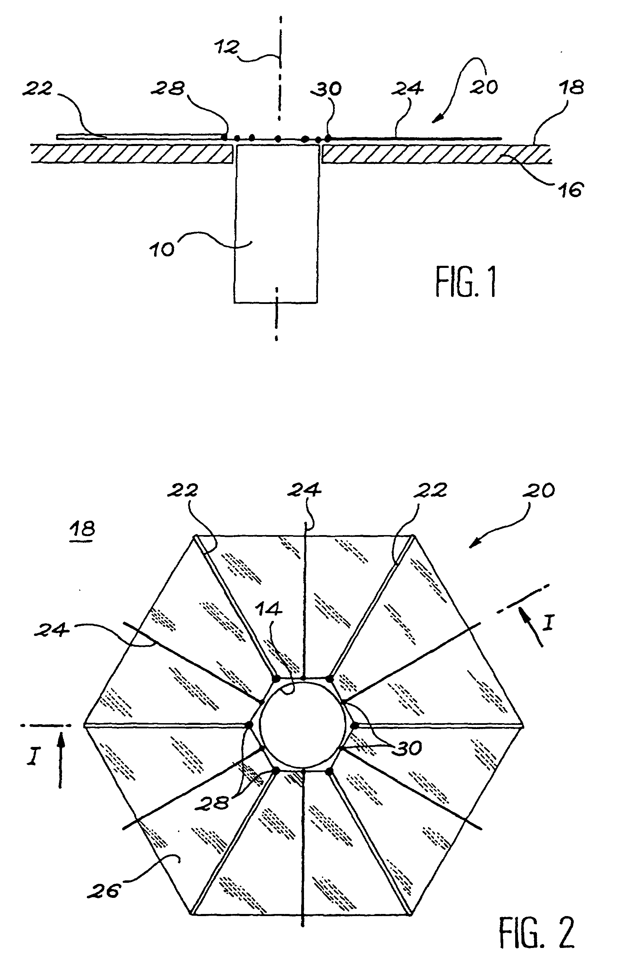

Une première forme de réalisation de l'invention va tout d'abord être décrite en se référant aux figures 1 à 4.

Sur ces figures, on a représenté schématiquement en 10 un instrument optique tel qu'un télescope, embarqué sur un véhicule spatial. Pour faciliter la compréhension, cet instrument optique 10 est représenté sous la forme d'un tube de diamètre et de longueur donnés. Ce tube contient les éléments optiques (non représentés) nécessaires à sa fonction.

L'instrument optique 10 est centré sur un axe optique 12. Il présente à l'une de ses extrémités, tournée vers le haut sur les figures 1, 3 et 4, une ouverture d'observation de forme circulaire, centrée sur l'axe optique 12. Cette ouverture est désignée par la référence 14 sur la figure 2.

L'instrument optique 10 est embarqué sur un véhicule spatial, dont seule une partie de la structure, attenante à cet instrument, est représentée sur les figures. Dans la première forme de réalisation de l'invention illustrée sur les figures 1 à 4, cette partie de structure comprend une paroi 16 dont une face extérieure 18, sensiblement plane, est orientée perpendiculairement à l'axe optique 12 et située sensiblement dans le plan de l'ouverture 14.

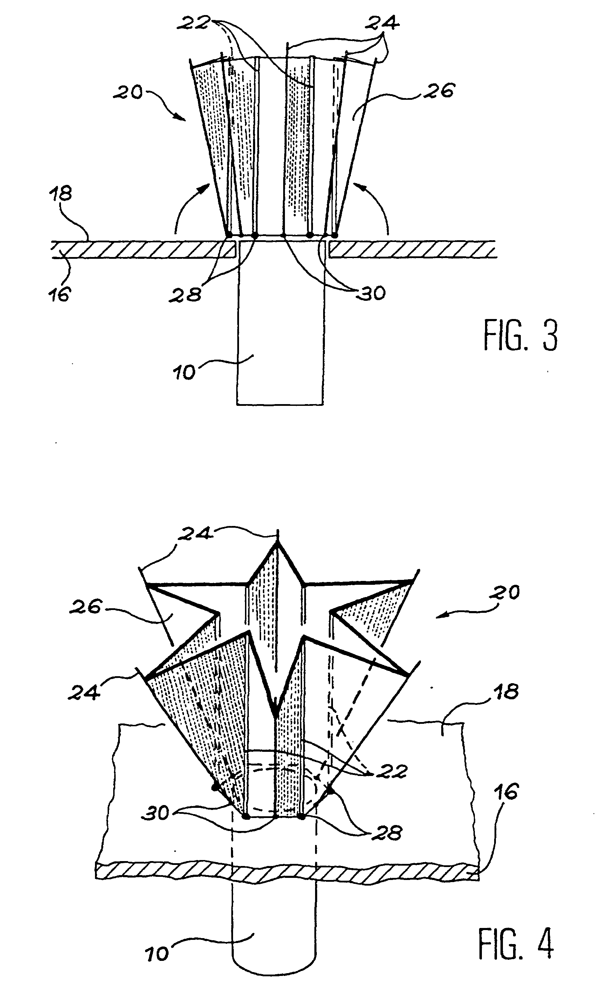

Conformément à l'invention, un dispositif escamotable 20, de type pare-soleil, conçu pour pouvoir s'opposer à une entrée de lumière parasite par l'ouverture 14, est associé à l'instrument optique 10. Ce dispositif peut présenter une configuration escamotée (figures 1 et 2) ou une configuration active (figures 3 et 4).

Dans la première forme de réalisation de l'invention, la configuration escamotée, illustrée sur les figures 1 et 2, est telle que le dispositif 20 est appliqué contre la surface extérieure plane 18 de la paroi 16.

Dans la configuration active, illustrée sur les figures 3 et 4, le dispositif 20 est placé dans le prolongement de l'instrument optique 10, du côté de son ouverture 14, autour du champ de vision de l'instrument optique.

Comme le montre notamment la figure 2, le dispositif escamotable 20 conforme à l'invention comprend des premières tiges 22, des deuxièmes tiges 24, ainsi qu'une enveloppe 26 souple et opaque portée par ces tiges. Chacune des tiges 22 et 24 est formée d'un seul tronçon rigide, articulé à la structure du véhicule spatial, autour de l'instrument optique 10. Plus précisément, chaque tige 22, 24 est articulée de façon à pouvoir pivoter dans un plan qui contient l'axe optique 12. Les articulations des tiges 22 sont désignées par les références 28 et les articulations des tiges 24 sont désignées par les références 30 sur les figures.

Les articulations 28 et 30 sont toutes situées approximativement sur un cercle centré sur l'axe optique 12 et perpendiculaire à cet axe. Dans la première forme de réalisation de l'invention illustrée sur les figures 1 à 4, ce cercle est situé approximativement dans le même plan que celui de l'ouverture 14 de l'instrument optique 10.

Les premières tiges 22 sont régulièrement réparties autour de l'axe optique 12 et l'enveloppe 26 est fixée sur ces tiges par tout moyen approprié (couture, collage, rivets, boulons, etc.). De plus, toutes les tiges 22 présentent la même longueur.

Dans la forme de réalisation illustrée à titre d'exemple sur les figures 1 à 4, le nombre des deuxièmes tiges 24 est le même que celui des premières tiges 22 et ce nombre est égal à six. Chacune des deuxièmes tiges 24 est alors placée entre deux premières tiges 22 consécutives.

De plus, chacune des deuxièmes tiges 24 pivote autour de son articulation 30 dans le plan bissecteur des plans dans lesquels pivotent les deux premiers bras 22 adjacents. Les deuxièmes tiges 24 ont toutes la même longueur et cette longueur est sensiblement égale à celle des premières tiges 22, comme le montre la figure 2. Le dispositif 20 est donc symétrique autour de l'axe optique 12.

Dans cette forme de réalisation, les deuxièmes tiges 24 ne sont pas reliées à l'enveloppe 26. Cependant, elles sont normalement en appui contre la face de cette enveloppe 26 prévue pour être tournée vers l'axe optique 12 lorsque le dispositif 20 est dans sa configuration active illustrée sur les figures 3 et 4. Les deuxièmes tiges 24 ont alors pour fonction de maintenir l'enveloppe 26 radialement vers l'extérieur entre les premières tiges 22, dans la configuration active illustrée sur les figures 3 et 4. Elles évitent alors tout risque d'occultation partielle du champ de vision de l'instrument optique 10 par l'enveloppe 26.

En variante, les deuxièmes tiges 24 peuvent toutefois être fixées au moins partiellement à l'enveloppe 26, sans sortir du cadre de l'invention. Dans ce cas, les deuxièmes tiges 24 peuvent être placées indifféremment d'un côté ou de l'autre de l'enveloppe 26.

Le dispositif escamotable 20 conforme à l'invention comprend en outre des moyens de commande (non représentés) intégrés dans chacune des articulations 28 et 30 par lesquelles les tiges 22 et 24 sont reliées à la structure du satellite. Ces moyens de commande ont pour fonction de faire passer le dispositif 20 de sa configuration escamotée illustrée sur les figures 1 et 2 dans sa configuration active illustrée sur les figures 3 et 4, lorsqu'ils sont mis en oeuvre.

Dans la configuration escamotée illustrée sur les figures 1 et 2, toutes les tiges 22 et 24 sont maintenues contre la surface extérieure plane 18 de la paroi 16. Elles sont donc situées dans un plan perpendiculaire à l'axe optique 12 et orientées radialement par rapport à cet axe. Dans ces conditions, l'enveloppe 26 est tendue.

Dans la configuration active illustrée sur les figures 3 et 4, les premières tiges 22 sont orientées sensiblement parallèlement à l'axe optique 12, au-delà de l'ouverture 14 formée dans l'instrument optique 10. En revanche, les deuxièmes tiges 24 s'écartent progressivement de l'axe 12, au-delà de l'ouverture 14, afin de maintenir l'enveloppe 26 relativement tendue et écartée du champ de vision de l'instrument optique 10, comme le montre schématiquement la figure 4.

Dans la pratique, les moyens de commande qui sont associés aux articulations 28 et 30, pour faire passer le dispositif de sa configuration escamotée des figures 1 et 2 dans sa configuration active des figures 3 et 4, peuvent être constitués par tout moyen connu permettant d'accomplir cette fonction.

Une première solution consiste à utiliser des ressorts de torsion placés sur les axes de chacune des articulations 28 et 30, des butées limitant alors le pivotement des tiges 22 et 24 aux angles de pivotement désirés. Dans ce cas, des systèmes de bridage connus, habituellement appelés "systèmes de gerbage" sont utilisés pour maintenir le dispositif 20 dans sa configuration escamotée.

Les moyens de commande peuvent aussi utiliser des alliages à mémoire de forme ou encore tout autre organe moteur simple permettant d'accomplir la fonction désirée.

Dans la première forme de réalisation de l'invention illustrée sur les figures 1 à 4, les moyens de commande logés dans les articulations 28 des premières tiges 22 assurent un pivotement de 90° de celles-ci, alors que les moyens de commande logés dans les articulations 30 des deuxièmes tiges 24 assurent un pivotement sensiblement inférieur à 90° de celles-ci.

Dans sa configuration plane illustrée sur la figure 2, l'enveloppe 26 a approximativement la forme d'un disque. Ce disque présente une ouverture centrale adjacente aux articulations 28 et 30. Le bord de cette ouverture centrale, de forme circulaire ou polygonale, est en contact avec la surface 18, de façon à entourer l'ouverture 14 sans que la lumière puisse passer. Le bord périphérique extérieur du disque formé par l'enveloppe 26 peut être polygonal, comme l'illustre la figure 2, circulaire ou autre.

Dans la configuration escamotée illustrée sur les figures 1 et 2, l'enveloppe 26 est placée en totalité autour de l'instrument optique 10 et plaquée contre la paroi 16 du satellite. L'encombrement du dispositif 20 est donc extrêmement réduit et ne contrarie en rien l'implantation du satellite sous la coiffe d'un lanceur.

Dans la configuration active illustrée sur les figures 2 et 3, l'enveloppe 26 prolonge l'instrument optique 10 au-delà de son ouverture 14. Elle s'oppose ainsi à toute entrée de lumière solaire parasite par l'ouverture 14. La fonction de pare-soleil est ainsi assurée.

Les tiges 22 et 24 ainsi que l'enveloppe 26 sont réalisées en tout matériau présentant les caractéristiques mécaniques et optiques désirées, utilisable dans l'industrie spatiale.

Ainsi, les tiges 22 et 24 peuvent être des tiges métalliques (titane, SiC, etc.) ou en matériau composite.

De façon comparable, l'enveloppe 26 peut être réalisée en tout matériau souple et opaque dans la gamme de longueurs d'onde de l'instrument optique considéré. Il peut notamment s'agir d'un tissu peint intérieurement en noir ou en doré.

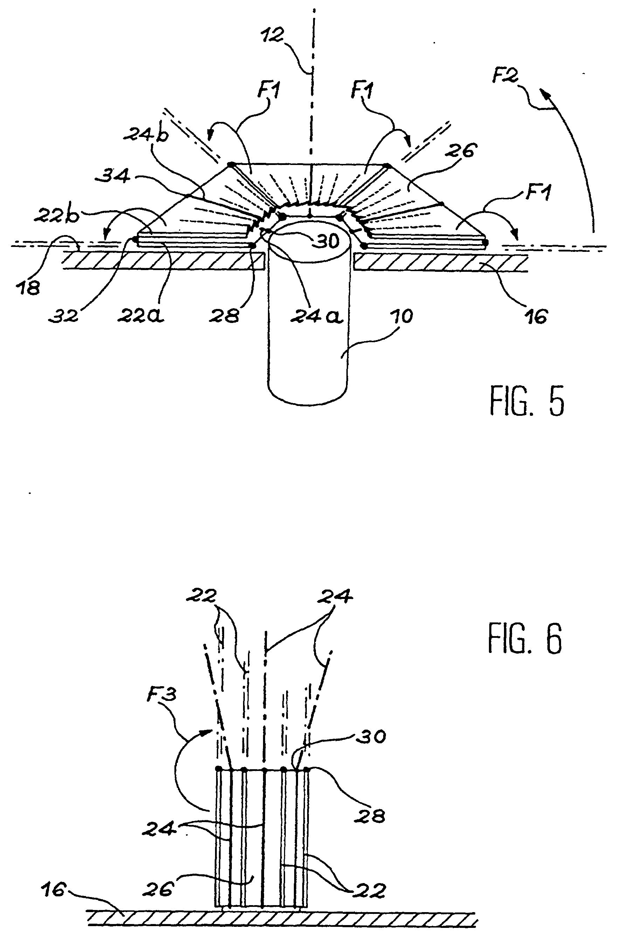

Sur la figure 5, on a représenté une variante de la première forme de réalisation de l'invention.

Cette variante diffère essentiellement de la forme de réalisation décrite par le fait qu'au lieu d'être formée d'un seul tronçon rigide, chacune des tiges 22 et 24 se compose de deux tronçons rigides articulés bout-à-bout. Ces tronçons sont désignés par les références 22a et 22b pour les premières tiges 22 et par les références 24a et 24b pour les deuxièmes tiges 24. Les deux tronçons de chacune des tiges 22 et 24 sont sensiblement de même longueur.

Chacun des premiers tronçons 22a des premières tiges 22 est alors articulé sur la structure du satellite par l'une des articulations 28, alors que le deuxième tronçon 22b de cette première tige 22 est articulé à l'extrémité opposée du premier tronçon 22a par une autre articulation 32.

De façon comparable, une extrémité du premier tronçon 24a de chacune des deuxièmes tiges 24 est articulée sur la structure du satellite par l'une des articulations 30, alors que le deuxième tronçon 24b de cette deuxième tige est articulé à l'extrémité opposée du premier tronçon 24a par une articulation 34.

Les articulations 32 et 34 sont réalisées de telle sorte que les tronçons 22b et 24b se replient respectivement sur les tronçons 22a et 24a lorsque ces derniers sont appliqués contre la surface extérieure 18 de la paroi 16, dans la configuration escamotée illustrée sur la figure 5. La partie de l'enveloppe 26 liée aux deuxièmes tronçons 22b et 24b forme alors des plis, comme l'illustre la figure 5.

Dans ce cas, des moyens de commande, de préférence identiques à ceux qui équipent les articulations 28 et 30 sont intégrés dans les articulations 32 et 34.

Lorsqu'on désire faire passer le dispositif de sa configuration escamotée illustrée sur la figure 5 dans sa configuration active, les moyens de commande intégrés aux articulations 32 et 34 sont d'abord mis en oeuvre. Les deuxièmes tronçons 22b et 24b des tiges 22 et 24 pivotent alors vers l'extérieur dans les plans qui les contiennent, passant par l'axe optique 12. Ce pivotement est illustré schématiquement par les flèches F1 sur la figure 5. Lorsqu'il est achevé, les deuxièmes tronçons 22b des tiges 22 se trouvent dans le prolongement des premiers tronçons 22a de ces tiges. De même, les deuxièmes tronçons 24b des tiges 24 sont placés dans le prolongement des premiers tronçons 24a de ces tiges.

Le dispositif présente alors une configuration analogue à celle du dispositif selon la première forme de réalisation décrite, en configuration escamotée. La mise en oeuvre des moyens de commande intégrés aux articulations 28 et 30 permet de le faire passer en configuration active, comme on l'a illustré schématiquement par la flèche F2 sur la figure 5.

L'agencement qui vient d'être décrit en se référant à la figure 5 peut être généralisé à des tiges 22 et 24 formées de plus de deux tronçons rigides articulés bout-à-bout. Le nombre de tronçons doit cependant rester raisonnable, afin de ne pas compliquer exagérément le mécanisme.

Cette variante de réalisation permet d'accroître encore la longueur du dispositif pare-soleil, pour un encombrement pratiquement inchangé en configuration escamotée.

On décrira à présent une deuxième forme de réalisation de l'invention, en se référant à la figure 6.

Cette deuxième forme de réalisation diffère essentiellement de la première par la configuration escamotée du dispositif et par l'angle de pivotement des tiges lors de la mise en oeuvre des moyens de commande. La structure du dispositif 20 est, par ailleurs, inchangée, de sorte qu'elle ne sera pas décrite à nouveau.

Dans cette deuxième forme de réalisation, la paroi 16 est supprimée ou placée à l'autre extrémité de l'instrument optique 10. Le dispositif 20 peut donc être replié contre la surface extérieure approximativement cylindrique de l'instrument optique 10, comme on l'a illustré en trait plein sur la figure 6. Dans la configuration escamotée ainsi obtenue, les tiges 22 et 24 sont orientées sensiblement parallèlement à l'axe optique 12, et situées en deçà de l'ouverture 14 et de leurs articulations 28 et 30.

La configuration active du dispositif est par ailleurs la même que dans la première forme de réalisation. Par conséquent, la mise en oeuvre des moyens de commande, illustrée schématiquement par la flèche F3 sur la figure 6, s'accompagne d'un pivotement de 180° des premières tiges 22 autour de leurs articulations 28 et d'un pivotement inférieur à 180° des deuxièmes tiges 24 autour de leurs articulations 30.

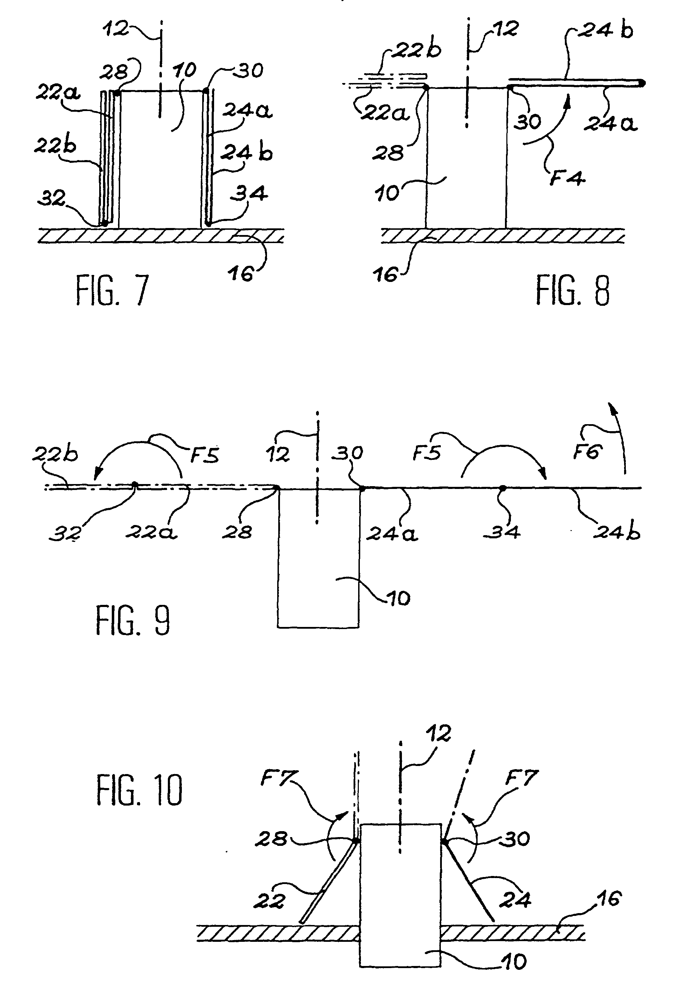

Sur les figures 7 à 9, on a représenté une variante de la deuxième forme de réalisation de l'invention. Cette variante s'apparente à la variante de la figure 5, puisqu'elle concerne le cas où, au lieu d'être réalisée sous la forme d'un seul tronçon rigide, chacune des tiges 22 et 24 est formée de deux tronçons rigides articulés bout à bout.

Dans la configuration escamotée illustrée sur la figure 7, les premiers tronçons 22a, 24a de chacune des tiges 22 et 24 sont repliés sur la surface extérieure cylindrique de l'instrument optique 10, autour des articulations 28, 30 et les deuxièmes tronçons 22b, 24b de chacune des tiges sont repliées sur les premiers tronçons, autour d'articulations 32 et 34.

Le passage du dispositif de sa configuration escamotée illustrée sur la figure 7 dans sa configuration active s'effectue en trois étapes, illustrées schématiquement sur les figures 8 et 9.

Lors d'une première étape matérialisée sur la figure 8 par la flèche F4, les deux tronçons 22a, 22b et 24a, 24b de chacune des tiges 22 et 24 pivotent vers l'extérieur d'environ 90° autour des articulations respectives 28 et 30. Le dispositif se trouve alors sensiblement dans le plan de l'ouverture de l'instrument optique 10, c'est-à-dire dans une configuration analogue à celle de la figure 5.

La deuxième étape consiste en un pivotement de 180° des deuxièmes segments 22b et 24b des tiges 22 et 24 autour des articulations 32 et 34, comme l'illustrent les flèches F5 sur la figure 9. Ce mouvement est analogue à celui qui est désigné par les flèches F1 sur la figure 5.

Enfin, les tiges 22 et 24 pivotent à nouveau d'environ 90° autour de leurs articulations 28 et 30, comme l'indique la flèche F6 sur la figure 9. Ce mouvement, comparable à celui qui est désigné par la flèche F2 sur la figure 5, permet d'amener l'enveloppe 26 en configuration active, sensiblement dans le prolongement de l'instrument optique 10, au-delà de son ouverture.

Dans cette variante de réalisation des figures 7 à 9, les différents mouvements de pivotement désignés par les flèches F4 à F6 sont pilotés par des moyens de commande associés aux différentes articulations, comme on l'a décrit précédemment.

Sur la figure 10, on a représenté schématiquement une troisième forme de réalisation de l'invention. Cette forme de réalisation diffère essentiellement des formes de réalisation décrites précédemment par la configuration escamotée du dispositif.

Dans cette configuration escamotée, les tiges 22 et 24 s'écartent alors progressivement de l'axe optique 12, à partir de leurs articulations 28 et 30, tout en restant placées autour de l'instrument optique 10 et en deçà de l'ouverture formée dans celui-ci.

Comme on l'a illustré schématiquement sur la figure 10, cette forme de réalisation correspond au cas où la paroi 16 est en retrait par rapport à l'ouverture formée dans l'instrument optique, sur une distance insuffisante pour que les tiges 22 et 24 puissent être totalement repliées sur la surface périphérique extérieure de l'instrument optique. Les extrémités libres des tiges 22 et 24 sont alors en butée contre la paroi 16 et donnent au dispositif une forme sensiblement tronconique dans sa configuration escamotée illustrée en trait plein.

Les articulations 28 et 30 ne sont pas placées nécessairement dans le plan de l'ouverture de l'instrument optique 10. Ainsi, sur la figure 10 ces articulations sont situées légèrement en retrait par rapport à cette ouverture.

La configuration active du dispositif étant la même que dans les formes de réalisation décrites précédemment, l'angle de pivotement permettant de faire passer les premières tiges 22 de la configuration escamotée dans la configuration active est un angle intermédiaire entre 90° et 180°, comme l'illustrent les flèches F7 sur la figure 10.

Dans toutes les formes de réalisation décrites jusqu'à présent, le dispositif est symétrique autour de l'axe optique 12. En particulier, les tiges 22 et 24 sont toutes de même longueur et elles sont régulièrement réparties sur toute la circonférence, autour de l'axe optique 12.

Dans certains cas, la lumière parasite incidente dont on désire protéger l'instrument optique peut être émise selon une direction latérale invariable par rapport à cet instrument. L'utilisation d'un dispositif présentant une géométrie dissymétrique dans sa configuration active peut alors être envisagée, afin notamment de limiter le poids et l'encombrement du dispositif au strict nécessaire.

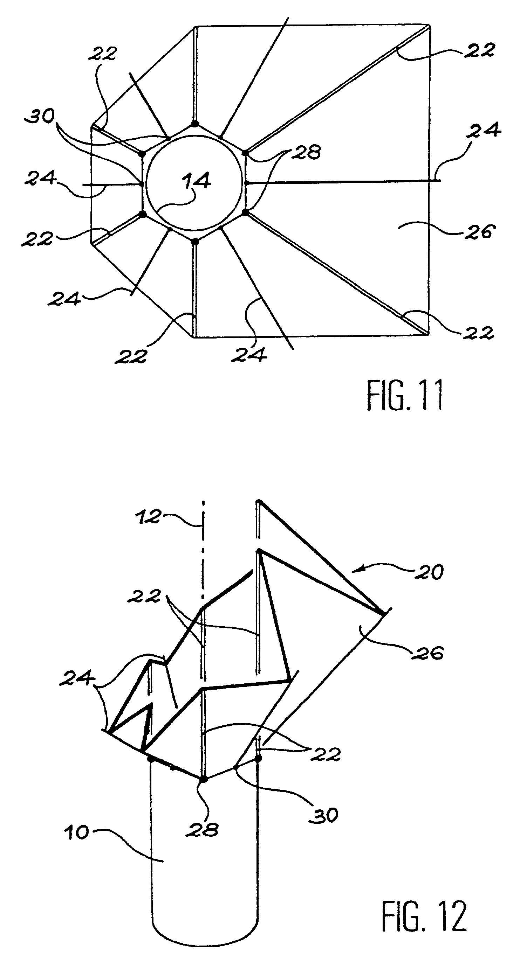

Les figures 11 et 12 illustrent schématiquement une variante de la première forme de réalisation de l'invention, appliquée à un tel dispositif dissymétrique. Comme le montrent ces figures, les tiges 22 et 24 présentent alors une plus grande longueur d'un côté de l'instrument optique 10 que de l'autre. Les dimensions de l'enveloppe 26 évoluent sur la circonférence du dispositif dans des proportions comparables à celles des longueurs des tiges 22 et 24.

Par conséquent, lorsque le dispositif se trouve dans sa configuration active illustrée sur la figure 12, il prolonge l'instrument optique 10 au-delà de son ouverture 14 sur une longueur sensiblement plus grande d'un côté que de l'autre. En prenant soin d'effectuer une orientation adéquate de l'instrument optique par rapport à la source de lumière parasite, supposée située à droite dans le cas de la figure 12, on parvient au résultat désiré.

Dans toutes les formes de réalisation décrites jusqu'à présent, une seule deuxième tige 24 est placée entre deux premières tiges 22 consécutives. Toutefois, cet agencement n'est pas impératif et l'on comprendra aisément que deux deuxièmes tiges ou plus peuvent être placées entre deux premières tiges consécutives, sans sortir du cadre de l'invention.

Par ailleurs, la variante de réalisation à caractère dissymétrique des figures 11 et 12, décrite dans le cas de la forme de réalisation de la figure 1, peut s'appliquer sans difficulté aux autres formes de réalisation décrites, ainsi qu'à leurs variantes dans lesquelles chacune des tiges 22 et 24 est formée de plusieurs tronçons articulés.

En outre, au lieu de contenir l'axe 12, les plans dans lesquels se déplacent les tiges 22 et 24 peuvent être parallèles à cet axe tout en ne le contenant pas, sans sortir du cadre de l'invention.

Enfin, il est à noter que le dispositif escamotable selon l'invention peut être utilisé quelle que soit la nature de la source lumineuse parasite (soleil ou source artificielle) et sur tout type d'instrument optique, quel que soit son domaine d'utilisation (spatial ou terrestre).

## Revendications

1. Dispositif escamotable, apte à s'opposer à une entrée de lumière parasite par une ouverture d'un instrument optique (10) d'axe (12) donné, **caractérisé en ce qu'**il comprend des tiges (22,24) articulées autour de l'instrument optique (10) dans des plans contenant ledit axe (12), ou parallèles à celui-ci, une enveloppe (26) souple et opaque portée par lesdites tiges (22,24), et des moyens de commande aptes à faire pivoter les tiges entre une configuration escamotée dans laquelle l'enveloppe (26) est placée autour de l'instrument optique (10) et une configuration active dans laquelle l'enveloppe (26) prolonge celui-ci au-delà de ladite ouverture (14).

2. Dispositif selon la revendication 1, dans lequel lesdites tiges comprennent des premières tiges (22) auxquelles est fixée l'enveloppe (26) et des deuxièmes tiges (24) montées entre les premières tiges (22) et coopérant avec l'enveloppe (26) pour la maintenir radialement vers l'extérieur entre celles-ci, dans la configuration active.

3. Dispositif selon la revendication 2, dans lequel, dans la configuration active, les premières tiges (22) sont orientées sensiblement parallèlement audit axe (12) et les deuxièmes tiges (24) s'écartent progressivement dudit axe, au-delà de l'ouverture (14).

4. Dispositif selon l'une quelconque des revendications 1 et 2, dans lequel une seule deuxième tige (24) est montée entre deux premières tiges (22) consécutives.

5. Dispositif selon l'une quelconque des revendications 1 et 2, dans lequel au moins deux deuxièmes tiges (24) sont montées entre deux premières tiges (22) consécutives.

6. Dispositif selon l'une quelconque des revendications 2 à 5, dans lequel les deuxièmes tiges (24) sont en appui sur une face de l'enveloppe (26) apte à être tournée vers ledit axe (12), dans ladite configuration active.

7. Dispositif selon l'une quelconque des revendications 1 à 6, dans lequel les tiges (22,24) sont régulièrement réparties autour dudit axe (12) et sont sensiblement de même longueur.

8. Dispositif selon l'une quelconque des revendications 1 à 6, dans lequel les tiges (22,24) ont des longueurs différentes.

9. Dispositif selon l'une quelconque des revendications 1 à 8, dans lequel, dans la configuration escamotée, les tiges (22,24) sont situées dans un plan perpendiculaire audit axe (12).

10. Dispositif selon l'une quelconque des revendications 1 à 8, dans lequel, dans la configuration escamotée, les tiges (22,24) sont orientées sensiblement parallèlement audit axe (12) autour de l'instrument optique (10), en-deçà de l'ouverture (14).

11. Dispositif selon l'une quelconque des revendications 1 à 8, dans lequel, dans la configuration escamotée, les tiges (22,24) s'écartent progressivement dudit axe (12) autour de l'instrument optique (10), en-deçà de l'ouverture (14).

12. Dispositif selon l'une quelconque des revendications 1 à 11, dans lequel chacune des tiges (22,24) est formée d'un seul tronçon rigide.

13. Dispositif selon l'une quelconque des revendications 1 à 11, dans lequel chacune des tiges (22,24) est formée d'au moins deux tronçons rigides (22a,22b ; 24a,24b) articulés bout à bout, de façon à être repliés l'un sur l'autre dans la configuration escamotée et de façon à être disposés dans le prolongement l'un de l'autre dans la configuration active.

## Claims

1. Retractable device, capable of hindering the entry of parasitic light through an opening in an optical instrument (10) with a given axis (12), **characterized in that** it comprises rods (22, 24) articulated about the optical instrument (10) in planes that include said axis (12), or are parallel to it, a flexible and opaque covering (26) carried by said rods (22, 24), and command means capable of causing the rods to pivot between a retracted configuration in which the covering (26) is positioned around the optical instrument (10) and an active configuration in which the covering (26) extends beyond said opening (14).

2. Device according to claim 1, in which said rods comprise first rods (22) to which the covering (26) is fixed and second rods (24) mounted between the first rods (22) and cooperating with the covering (26) in order to hold it radially outwards between them, in the active configuration.

3. Device according to claim 2, in which, in the active configuration, the first rods (21) are directed substantially parallel to said axis (12) and the second rods (24) deviate progressively from said axis beyond the opening (14).

4. Device according to either of the claims 1 and 2, in which a single second rod (24) is mounted between two consecutive first rods (22).

5. Device according to either of the claims 1 and 2, in which at least two second rods (24) are mounted between two consecutive first rods (22).

6. Device according to any one of the claims 2 to 5, in which the second rods (24) supported on one surface of the covering (26) are capable of being turned towards said axis (12), in said active configuration.

7. Device according to any one of the claims 1 to 6, in which the rods (22, 24) are regularly distributed around said axis (12) and are approximately of the same length.

8. Device according to any one of the claims 1 to 6, in which the rods (22, 24) have different lengths.

9. Device according to any one of the claims 1 to 8, in which, in the retracted configuration, the rods (22, 24) are situated in a plane perpendicular to said axis (12).

10. Device according to any one of the claims 1 to 8, in which in the retracted configuration, the rods (22, 24) are directed substantially parallel to said axis (12) around the optical instrument (10), short of the opening (14).

11. Device according to any one of the claims 1 to 8, in which in the retracted configuration, the rods (22, 24) deviate progressively from said axis (12) around the optical instrument (10), short of the opening (14).

12. Device according to any one of the claims 1 to 11, in which each of the rods (22, 24) is formed from a single rigid section.

13. Device according to any one of the claims 1 to 11, in which each of the rods (22, 24) is formed from at least two rigid sections (22a, 22b; 24a, 24b) articulated end to end, in such a way as to be folded one upon the other in the retracted configuration and in such a way as to be arranged in extension, one to the other, in the active configuration.

## Patentansprüche

1. Klappbare bzw. einziehbare Vorrichtung, die dem Eintritt von störendem Licht über eine Öffnung eines optischen Instruments (10) mit einer gegebenen Achse (12) entgegenwirken kann,
**dadurch gekennzeichnet, dass** sie Stangen (22,24) umfasst, welche um das optische Instrument (10) herum in die Achse (12) enthaltenden Ebenen angelenkt oder parallel zu dieser sind, eine von den Stangen (22,24) getragene elastische und lichtundurchlässige Umhüllung (26) sowie Steuermittel, welche die Stangen zwischen einer eingezogenen bzw. eingeklappten Konfiguration, in der die Umhüllung (26) um das optische Instrument (10) herum angeordnet ist, und einer aktiven Konfiguration, in der die Umhüllung (26) dieses über die Öffnung (14) hinaus verlängert, drehen/schwenken können.

2. Vorrichtung nach Anspruch 1, wobei die Stangen erste Stangen (22) umfassen, an denen die Umhüllung (26) befestigt ist, sowie zweite Stangen (24), die zwischen den ersten Stangen (22) angebracht sind und mit der Umhüllung (26) zusammenwirken, um sie radial zwischen diesen in der aktiven Konfiguration nach außen zu halten.

3. Vorrichtung nach Anspruch 2, wobei in der aktiven Konfiguration die ersten Stangen (22) im wesentlichen parallel zu der Achse (12) ausgerichtet sind und die zweiten Stangen (24) sich jenseits der Öffnung (14) zunehmend von der Achse entfernen.

4. Vorrichtung nach einem der Ansprüche 1 und 2, wobei eine einzige zweite Stange (24) zwischen zwei ersten aufeinanderfolgenden Stangen (22) angebracht ist.

5. Vorrichtung nach einem der Ansprüche 1 und 2, wobei mindestens zwei zweite Stangen (24) zwischen zwei ersten aufeinanderfolgenden Stangen (22) angebracht sind.

6. Vorrichtung nach einem der Ansprüche 2 bis 5, wobei die zweiten Stangen (24) auf einer Fläche der Umhüllung (26), die zu der Achse (12) hin gedreht werden kann, in der aktiven Konfiguration aufliegen.

7. Vorrichtung nach einem der Ansprüche 1 bis 6, wobei die Stangen (22,24) regelmäßig um die Achse (12) herum verteilt sind und im wesentlichen die gleiche Länge aufweisen.

8. Vorrichtung nach einem der Ansprüche 1 bis 6, wobei die Stangen (22,24) verschiedene Längen aufweisen.

9. Vorrichtung nach einem der Ansprüche 1 bis 8, wobei in der eingezogenen bzw. eingeklappten Konfiguration die Stangen (22,24) in einer zu der Achse (12) senkrechten Ebene gelegen sind.

10. Vorrichtung nach einem der Ansprüche 1 bis 8, wobei in der eingezogenen bzw. eingeklappten Konfiguration die Stangen (22,24) im wesentlichen parallel zu der Achse (12) um das optische Instrument (10) herum diesseits der Öffnung (14) ausgerichtet sind.

11. Vorrichtung nach einem der Ansprüche 1 bis 8, wobei in der eingezogenen bzw. eingeklappten Konfiguration sich die Stangen (22,24) um das optische Instrument (10) herum diesseits der Öffnung (14) zunehmend von der Achse (12) entfernen.

12. Vorrichtung nach einem der Ansprüche 1 bis 11, wobei jede der Stangen (22,24) aus einem einzigen starren Teil gebildet ist.

13. Vorrichtung nach einem der Ansprüche 1 bis 11, wobei jede der Stangen (22,24) aus mindestens zwei starren, an ihren Enden miteinander gelenkig verbundenen Teilen (22a,22b;24a,24b) so geformt ist, dass diese in der eingeklappten bzw. eingezogenen Konfiguration übereinandergeklappt werden können und in der aktiven Konfiguration einander verlängernd angeordnet werden können.
